Europäisches Patentamt

European Patent Office

Office européen des brevets

(11) Veröffentlichungsnummer: **0 320 699 B1**

# EUROPÄISCHE PATENTSCHRIFT

(45) Veröffentlichungstag der Patentschrift: **22.01.92**

(51) Int. Cl.5: **A41H 37/00**

(21) Anmeldenummer: **88119946.7**

(22) Anmeldetag: **30.11.88**

(54) **Verfahren zur Befestigung von Beschlagteilen an Textil- oder Kunststoffplanen und Riemenkrampe zur Verwendung in einem solchen Verfahren.**

(30) Priorität: **15.12.87 DE 3742418**
**22.09.88 EP 88115537**
**28.09.88 DE 8812232 U**

(43) Veröffentlichungstag der Anmeldung:
**21.06.89 Patentblatt 89/25**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**DD-A- 134 888**
**DE-A- 2 722 179**
**DE-A- 3 032 208**
**DE-U- 8 228 727**

(73) Patentinhaber: **Than, Johannes**
**Müllers Weg 3**
**W-5768 Sundern-Endorf(DE)**

(72) Erfinder: **Than, Johannes**
**Müllers Weg 3**
**W-5768 Sundern-Endorf(DE)**

(74) Vertreter: **Patentanwälte Meinke und Dabring-**
**haus Dipl.-Ing. J. Meinke Dipl.-Ing. W. Dab-**
**ringhaus**
**Westenhellweg 67**
**W-4600 Dortmund 1(DE)**

# Beschreibung

Die Erfindung richtet sich auf ein Verfahren zur Befestigung von Beschlagteilen, wie Ösen, Krampen oder dgl., insbesondere an Textil- oder Kunststoffplanen, wobei wenigstens ein Beschlagunterteil durch Stanzen, Nieten oder dgl. mit einem Beschlagoberteil unter Zwischenlage der Plane befestigt wird sowie auf eine Riemenkrampe zur Verwendung in einem solchen Verfahren.

Es ist bekannnt, Beschlagteile an Planen festzulegen, S.z.B DE-A-3 032 208. So werden Ösen aus Ober- und Unterteil z. B. an Abdeckplanen von Lkw-Aufbauten bei der Anpassung der Plane an den jeweiligen Aufbau vor Ort z.B. mit hydraulischen Vorrichtungen eingeprägt. Eine solche Prägevorrichtung ist in dem DE-GM 82 28 727 beschrieben.

Neben Ösen werden die Planen auch mit sogenannten Zollverschlüssen versehen, wozu eine Reihe von Riemenkrampen in die Planen eingebracht werden müssen. Bei dem bisher eingesetzten Verfahren geht man dabei wie folgt vor: Zunächst werden Löcher auf den Stoff gezeichnet, dann werden mittels sogennanter Lochpfeifen an diesen Stellen die Löcher ausgestanzt. Derartige Löcher müssen auch in Unterlagen, z.B. aus Kunststoff, eingebracht werden. Danach werden die Nietenschäfte der Nieten durch die Kunststoffunterlagen geführt, die Unterlagen mit den durchgesteckten Nieten unter die Plane gelegt und die Nieten dann durch die vorgestanzten Löcher hindurchgefädelt. Nunmehr werden die Riemenkrampen mit ihren Aufnahmeborhrungen über die Nietenschäfte gelegt und schließlich die Nieten mit einem sogenannten Nietendepper umgebördelt.

Dieser Arbeitsvorgang ist vergleichsweise aufwendig, so müssen vor Ort eine Reihe von Arbeiten nacheinander durchgeführt werden, so daß es Aufgabe der Erfindung ist, eine Lösung zu schaffen, mit der das Einsetzen derartiger Beschlagteile stark vereinfacht wird.

Mit einem Verfahren der eingangs bezeichneten Art wird diese Aufgabe gemäß der Erfindung dadurch gelöst, daß bei Einsatz von Befestigungsnieten wenigstens die zur Befestigung eines Beschlagteiles notwendige Anzahl an Befestigungsnieten am Beschlagunterteil vor der Montagelage dort verlierungsfrei befestigt werden, die vorpositionierten und verlierungsfrei befestigten Nieten in ein Stanz- bzw. Nietwerkzeug eingelegt und unter Zwischenlage der Plane oder des entsprechenden anderen Elmentes in einem Arbeitsgang mit dem Beschlagoberteil verbunden werden.

Erkennbar wird die Montage hierdurch sehr stark vereinfacht. Einzeichnen, Vorbohren und dgl. wird vollständig entbehrlich gemacht, da der Nietvorgang praktisch in einem einzigen Arbeitsgang alle bisherigen Schritte in sich vereint, sieht man von der Vormontage der Nieten am Unterteil einmal ab.

In Ausgestaltung ist vorgesehen, daß selbstlochende Nieten eingesetzt werden. Damit wird zusätzlich ein Ausstanzen im Stoff oder Kunststoffgewebe entbehrlich. Das Beschlagunterteil kann aus Metall gefertigt sein, so daß die Nieten dort erfindungsgemäß durch Verpressen, Verschweißen und Verkleben befestigt werden können.

Ist das Beschlagunterteil aus Kunststoff, so können die Nieten dort festgelegt werden, indem in die Kunststoffunterlagen Löcher aufgenommen werden, die geringfügig enger sind als die Nietschäfte, so daß die Schäfte am Kunststoff klemmend festgelegt werden.

Die Erfindung sieht auch eine Riemenkrampe zur Verwendung in dem zuvor beschriebenen Verfahren vor, wobei sich eine derartige Riemenkrampe durch ein Krampenunterteil auszeichnet, welches mit vor der Montagelage verlierungsfrei befestigten Nieten ausgerüstet ist.

Die Nieten sind dabei erfindungsgemäß selbstlochend, sie können durch Verpressen, Verschweißen oder Verkleben am Krampenunterteil befestigt sein.

Das Krampenunterteil kann auf einem Kunststoffelement gebildet werden, wobei dort beispielsweise die Nietenköpfe wenigstens bereichsweise eingeschweißt sein können.

Die Erfindung ist nachstehend anhand der Zeichnung beispielsweise näher erläutert. Diese zeigt in

Fig. 1     eine noch nicht fertig montierte Riemenkrampe mit Ober- und Unterteil und dazwischenliegender Plane,

Fig. 2     ein abgewandeltes Ausführungsbeispiel eines Unterteiles.

Die allgemein mit 1 bezeichnete Riemenkrampe weist ein Krampenoberteil mit einem Riemenbügel 3 und eingeschnitten dargestelltem Krampenunterteil 4 auf mit im dargestellten Beispiel zwei Nieten 5, die am Unterteil 4 verlierungsfrei befestigt, z.B. verpreßt sind.

In der Montagelage wird das Nietenunterteil 4 unterhalb einer Plane, die in der Figur mit 6 bezeichnet ist, positioniert, das Nietenoberteil 2 darüber und mit einer entsprechenden Einrichtung aufeinander zubewegt, derart, daß die Nieten mit ihren freien, als selbstlochende Nietstege ausgebildeten Enden 7 unter Zwischenlage der Plane 6 Löcher 8 im Krampenoberteil 2 durchsetzen und dabei gleichzeitig die Plane 6 lochen. Der rückbördelnde Nietvorgang ist von üblicher Art und Weise.

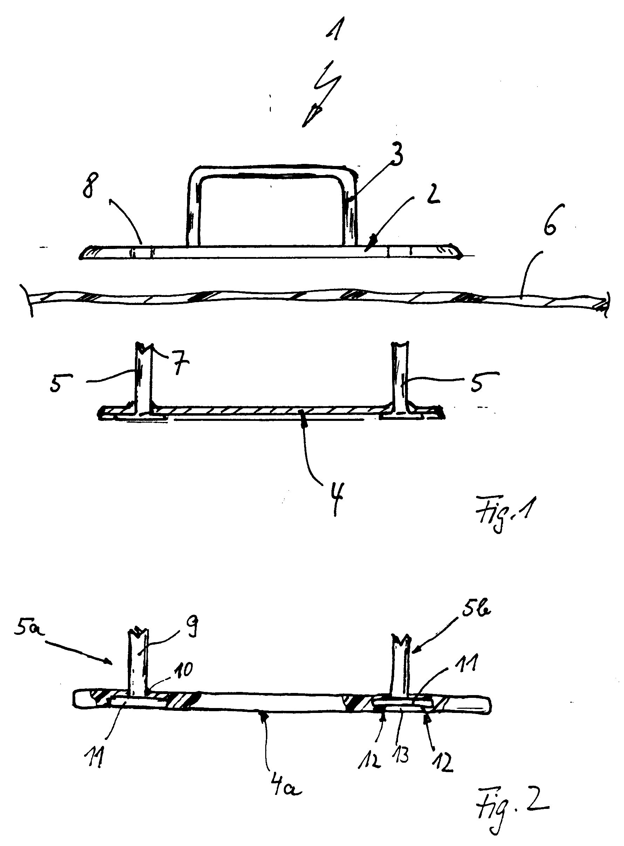

In Fig. 2 ist dargestellt, das Nietunterteil 4a aus Kunststoff zu fertigen, wie dies ein Merkmal der Erfindung ist. Der Schaft 9 der Niete 5a weist einen Durchmesser auf, der geringfügig größer ist, als der Durchmesser der mit 10 bezeichneten Durchgangsbohrung im Krampenunterteil 4a, so daß der Schaft 9 dort klemmend gehalten wird. Der Nietkopf 11 ist in einer Ausnehmung eingebettet.

In der rechten Figurenhälfte ist der Nietkopf 11 teilweise von Kunststoff umspritzt, was mit 12 bezeichnet ist, der mittlere Bereich ist freigelassen und mit 13 bezeichnet, um den Angriff eines Werkzeuges ohne Zerstörung des Kunststoffelementes 4a zu ermöglichen.

Die Erfindung ist insbesondere nicht darauf beschränkt, verlierungsfrei befestigte Nieten 5 allein für Riemenkrampen vorzusehen, hier können auch andere Beschlagteile vorgesehen sein, statt zwei Nieten können auch eine Mehrzahl derartiger Nieten an Beschlägen angeordnet sein. Die Krampen können auch an Leichtmetallprofilen befestigt werden, die dann zweckmäßig vorgebohrt werden und dgl. mehr.

## Patentansprüche

1. Verfahren zur Befestigung von Beschlagteilen, wie Ösen, Krampen (1) oder dgl., insbesondere an Textil- oder Kunststoffplanen, wobei wenigstens ein Beschlagunterteil (4) durch Stanzen, Nieten (5) oder dgl. mit einem Beschlagoberteil (3) unter Zwischenlage der Plane (6) befestigt wird,
dadurch gekennzeichnet,
daß bei Einsatz von Befestigungsnieten (5) wenigstens die zur Befestigung eines Beschlagteiles notwendige Anzahl an Befestigungsnieten (5) am Beschlagunterteil (4) vor der Montagelage dort verlierungsfrei befestigt werden, die vorpositionierten und verlierungsfrei befestigten Nieten (5) in ein Stanz-bzw. Nietwerkzeug eingelegt und unter Zwischenlage der Plane (6) oder dgl. in einem Arbeitsgang mit dem Beschlagoberteil (3) verbunden werden.

2. Verfahren nach Anspruch 1,
dadurch gekennzeichnet,
daß selbstlochende Nieten (5) eingesetzt werden.

3. Verfahren nach Anspruch 1 oder 2,
dadurch gekennzeichnet,
daß die selbstlochenden Nieten am Beschlagunterteil (4) durch Verpressen, Verschweißen oder Verkleben befestigt werden.

4. Verfahren nach einem der vorangehenden Ansprüche,
dadurch gekennzeichnet,
daß das Beschlagunterteil (4a) aus Kunststoff gefertigt und die Nieten (5a) mit ihren Nietschäften (9) durch Untermaß der Durchgangsbohrung (10) im Kunststoff dort festgelegt oder die Nietköpfe (11) im Kunststoffträgerkörper bei dessen Herstellung eingegossen werden.

5. Riemenkrampe zur Verwendung in dem Verfahren nach einem der vorangehenden Ansprüche aus einem Krampenunterteil und einem damit in der Befestigungslage vernieteten Krampenoberteil unter Zwischenlage eines Bandes, eines Gurtes, einer Plane oder dgl.,
dadurch gekennzeichnet,
daß das Krampenunterteil (4) mit dort vor der Montagelage verlierungsfrei befestigten Nieten (5) ausgerüstet ist.

6. Riemenkrampe nach Anspruch 5,
dadurch gekennzeichnet,
daß die Nieten (5) an ihren freien Enden mit selbstlochenden Nietstegen (7) ausgebildet sind.

7. Riemenkrampe nach Anspruch 5 oder 6,
dadurch gekennzeichnet,
daß die Nieten (5) und Krampenunterteile (4) durch Verpressen, Verschweißen oder Verkleben aneinander befestigt sind.

8. Riemenkrampe nach einem der vorangehenden Ansprüche,
dadurch gekennzeichnet,
daß das Krampenunterteil (4a) von einem Kunststoffelement zur Halterung der Befestigungsnieten (5a,5b) gebildet ist.

## Claims

1. A method of attaching fittings, such as lugs, clamps (1) or the like, in particular to textile or plastic tarpaulins, wherein at least a lower part (4) of the fitting is attached by punching, riveting (5) or the like to an upper part (3) of the fitting, with the tarpaulin (6) arranged therebetween, characterised in that when fixing rivets (5) are used, at least the number of fixing rivets (5) required to attach a fitting are captively attached to the lower part (4) of the fitting in advance of the mounting position, and the pre-positioned and captively attached rivets (5) are inserted in a punching or riveting tool and are connected to the upper part (3) of the fitting in one operating step with the tarpaulin (6) or the like arranged therebetween.

2. A method as claimed in Claim 1, characterised in that self-perforating rivets (5) are used.

3. A method as claimed in Claim 1 or 2, characterised in that the self-perforating rivets are attached to the lower part (4) of the fitting by pressing, welding or gluing.

4. A method as claimed in one of the preceding claims, characterised in that the lower part (4a) of the fitting is made of plastic and the shanks (9) of the rivets (5a) are fixed in the through bore (10) in the plastic by underdimensioning of said bore, or the rivet heads (11) are cast in the plastic carrier body at the time of the production thereof.

5. A belt clamp for use in the method claimed in one of the preceding claims, comprising a clamp lower part and a clamp upper part which is riveted thereto in the fixing position, with a band, a strap, a tarpaulin or the like arranged therebetween, characterised in that the clamp lower part (4) is equipped with rivets (5) captively attached in advance of the mounting position.

6. A belt clamp as claimed in Claim 5, characterised in that the rivets (5) are formed with self-perforating stems (7) at their free ends.

7. A belt clamp as claimed in Claim 5 or 6, characterised in that the rivets (5) and the clamp lower parts (4) are attached to one another by pressing, welding or gluing.

8. A belt clamp as claimed in one of the preceding claims, characterised in that the clamp lower part (4a) is formed by a plastic element to retain the fixing rivets (5a, 5b).

**Revendications**

1. Procédé de fixation de ferrures telles que des oeillets, des crampons (1) et analogues, notamment sur des feuilles en textile ou en matière plastique, dans lequel au moins une partie inférieure (4) de la ferrure est fixée à la partie supérieure (3) de la ferrure avec interposition de la feuille (6) par poinçonnage, rivetage (5) ou analogues, caractérisé en ce que lorsqu'on utilise des rivets de fixation (5), on fixe de façon imperdable le nombre de rivets de fixation (5) qui est nécessaire à la fixation d'une partie de la ferrure sur la partie inférieure (4) de la ferrure avant d'être en position de montage, on introduit les rivets (5) fixés de façon imperdable et préalablement positionnés dans un outil de poinçonnage ou de rivetage et on la réunit à la partie supérieure (3) de la ferrure après interposition de la feuille (6) ou analogue, au cours d'une seule opération.

2. Procédé selon la revendication 1, caractérisé en ce que l'on utilise des rivets autoperforants (5).

3. Procédé selon la revendication 1 ou 2, caractérisé en ce que les rivets autoperforants sont fixés à la partie inférieure (4) de la ferrure par compression, soudage ou collage.

4. Procédé selon l'une quelconque des revendications précédentes, caractérisé en ce que la partie inférieure (4a) de la ferrure est réalisée en matière plastique et les rivets (5a) y sont fixés par leur tige (9) grâce à un sous-dimensionnement de l'alésage (10) qui traverse la matière plastique, ou bien les têtes (11) des rivets sont coulées dans le corps de support en matière plastique au moment de sa fabrication.

5. Crampon de ceinture destiné à être utilisé avec le crampon de ceinture selon l'une quelconque des revendications précédentes, constitué par une partie inférieure et une partie supérieure rivetée à la première dans la position de fixation et après interposition d'une bande, d'une ceinture, d'une feuille ou analogue, caractérisé en ce que la partie inférieure (4) du crampon est équipée de rivets (5) fixés de façon imperdable avant d'être amenée à la position de montage.

6. Crampon de ceinture selon la revendication 5, caractérisé en ce que les rivets (5) sont constitués à leurs extrémités libres par des tiges (7) autoperforantes.

7. Crampon de ceinture selon la revendication 5 ou 6, caractérisé en ce que les rivets (5) et la partie inférieure (4) du crampon sont fixés ensemble par compression, soudage ou collage.

8. Crampon de ceinture selon l'une quelconque des revendications précédentes, caractérisé en ce que la partie inférieure (4a) du crampon est constituée par un élément en matière plastique pour retenir les rivets de fixation (5a, 5b).

*Fig. 1*

*Fig. 2*